# EUROPEAN PATENT APPLICATION

(11) **EP 3 012 551 A1**
(43) Date of publication of application: **27.04.2016**
(21) Application number: 14814149.2
(22) Date of filing: 16.06.2014
(51) Int. Cl.: F24H 9/00, F24H 1/00, F25B 1/00, F25B 39/00, F28D 9/02, F28F 3/08

(54) **HEAT PUMP APPARATUS**

(30) Priority: 18.06.2013 JP 2013127248
(71) Applicant: Panasonic Intellectual Property Management Co., Ltd., Osaka-shi, Osaka 540-6207 (JP)
(72) Inventor: NAKATANI, Kazuhito, Osaka 540-6207 (JP); ISAYAMA, Yasuhiko, Osaka 540-6207 (JP); AOYAMA, Shigeo, Osaka 540-6207 (JP)
(74) Representative: Eisenführ Speiser
(86) International application number: PCT/JP2014/003188
(87) International publication number: WO 2014/203514

(57) **Abstract**

A heat pump apparatus includes the following: a compressor (4) for compressing refrigerant; a plate heat exchanger (5) including a refrigerant inlet (5a), a refrigerant outlet (5b), a heat medium inlet (5c), and a heat medium outlet (5d) and performing heat exchange between the refrigerant and heat medium; a decompressor (6) for decompressing the refrigerant; and an evaporator (7) for performing heat exchange between the refrigerant and air. The refrigerant inlet (5a) is oriented in a direction identical to the refrigerant outlet (5b). The heat medium inlet (5c) is oriented in a direction opposite to the heat medium outlet (5d) and located at a height different from the heat medium outlet (5d). This structure equalizes the flow rate distribution of the heat medium flowing through the plate heat exchanger (5). The heat exchange is performed in the entire area of the plate heat exchanger (5), thereby improving the heat exchange efficiency of the plate heat exchanger (5).

## Description

### TECHNICAL FIELD

The present invention relates to a heat pump apparatus.

### BACKGROUND ART

A heat pump apparatus includes a refrigerant circuit in which a compressor, a water-refrigerant heat exchanger as a condenser, an expansion valve as a decompressor, and an air heat exchanger as an evaporator are connected in series. The water-refrigerant heat exchanger performs heat exchange between refrigerant and heat medium such as water. The heat pump apparatus produces cold or hot water used for air conditioning (see, for example, Patent Literature 1).

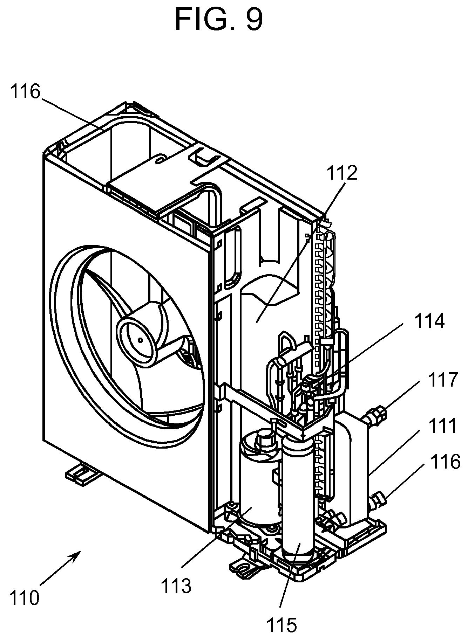

FIG. 9 is a perspective view of the internal structure of conventional heat pump apparatus 110.

As shown in FIG. 9, heat pump apparatus 110 includes water-refrigerant heat exchanger 111 of plate type as a water-refrigerant heat exchanger.

The inside of heat pump apparatus 110 is partitioned into a machine room (the right front side in FIG. 9) and a blower room (the left back side in FIG. 9) by partition board 112.

The machine room accommodates the water-refrigerant heat exchanger 111 and the refrigerant circuit including compressor 113, expansion valve 114, and accumulator 115.

Heat exchanger 111 is provided, on its rear side, with two connections to i a heat medium pipe, which are referred to as heat medium return port 116 and heat medium supply port 117. Heat exchanger 111 is further provided, on its front side, with two connections to a refrigerant pipe.

In heat exchanger 111, a plurality of heat-exchange plates are parallelly arranged in such a manner that passages for heat medium and refrigerant are formed between these plates.

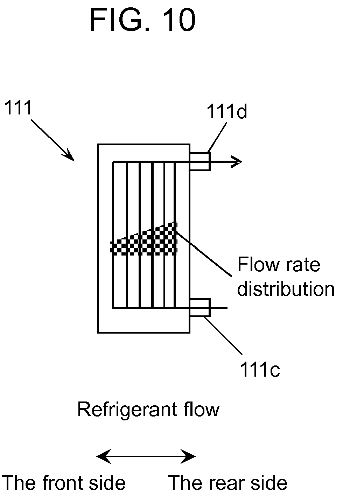

FIG. 10 is a conceptual view of a heat medium flow in heat exchanger 111. As shown in FIG. 10, the heat medium passages formed between the heat-exchange plates are joined together in parallel. The heat-exchange plate closest to the rear side of heat exchanger 111 is provided with heat medium inlet 111c through which the heat medium is drawn in and heat medium outlet 111d through which the heat medium is drawn out. Inlet 111c and outlet 111d are joined to heat medium return port 116 and heat medium supply port 117, respectively.

In this conventional art, a circulation pump for circulating the heat medium is disposed outside heat pump apparatus 110 together with a cistern. The cistern is used to supplement heat medium and also functions as a buffer for expanded heat medium. The circulation pump and the cistern (neither shown) communicate with heat pump apparatus 110 via pipes joined both to heat medium return port 116 and to heat medium supply port 117, thereby forming a heat medium circuit for circulating the heat medium.

### Citation List

### Patent Literature

PTL 1: Japanese Unexamined Patent Application Publication No. 2008-196777

### SUMMARY OF THE INVENTION

In the above-mentioned conventional heat pump apparatus 110, heat medium inlet 111c for drawing in the heat medium and heat medium outlet 111d for drawing out the heat medium are both formed on the rear side of the water-refrigerant heat exchanger of plate type. Inlet 111c and outlet 111d function as connections to the heat medium pipe.

In this configuration, the farther the heat-exchange plate is from heat medium inlet 111c and heat medium outlet 111d, the longer the passage of the heat medium and hence the larger the pressure loss in the passage.

As a result, as shown in FIG. 10, the closer the heat-exchange plate to the front side of heat exchanger 111, the lower the flow rate of the heat medium, causing a non-uniform flow rate distribution. The flow imbalance in the heat medium caused in heat exchanger 111 reduces heat exchange efficiency.

An object of the present invention is to solve this conventional problem.

The heat pump apparatus of the present invention includes the following: a compressor for compressing refrigerant; a plate heat exchanger including a refrigerant inlet, a refrigerant outlet, a heat medium inlet, and a heat medium outlet, for performing heat exchange between the refrigerant and heat medium; a decompressor for decompressing the refrigerant; and an evaporator for performing heat exchange between the refrigerant and air.

The refrigerant inlet is oriented in a same direction as the refrigerant outlet. The heat medium inlet is oriented in a direction opposite to the heat medium outlet and located at a height different from the heat medium outlet.

According to the present invention, the plate heat exchanger includes a plurality of approximately equal-length passages for the heat medium, thereby equalizing the flow rate distribution of the heat medium in the plate heat exchanger. This achieves a heat pump apparatus including a plate heat exchanger with excellent heat exchange efficiency.

### BRIEF DESCRIPTION OF DRAWINGS

FIG. 1 is a schematic configuration view of a heat pump apparatus according to a first exemplary embodiment of the present invention during heater operation.
FIG. 2 is a perspective view of the internal structure of the heat pump apparatus according to the first exemplary embodiment.
FIG. 3A is a sectional view of the internal structure of the heat pump apparatus according to the first exemplary embodiment.
FIG. 3B is a front view of the internal structure of the heat pump apparatus according to the first exemplary embodiment.
FIG. 3C is a side view of the internal structure of the heat pump apparatus according to the first exemplary embodiment.
FIG. 4 is a perspective view showing the shape of a water-refrigerant heat exchanger of plate type and flows of refrigerant and heat medium in this heat exchanger of the heat pump apparatus according to the first exemplary embodiment.
FIG. 5A is a conceptual view of a refrigerant flow in the water-refrigerant heat exchanger of plate type in the first exemplary embodiment.
FIG. 5B is a conceptual view of a heat medium flow in the water-refrigerant heat exchanger of plate type in the first exemplary embodiment.
FIG. 6 shows the relation between the refrigerant distribution in each phase state and the temperature of the heat medium in the water-refrigerant heat exchanger of plate type of the first exemplary embodiment.
FIG. 7 is a schematic configuration view of the heat pump apparatus according to the first exemplary embodiment during cooling operation.
FIG. 8 is a front view of the internal structure of a heat pump apparatus according to a second exemplary embodiment of the present invention.
FIG. 9 is a perspective view of the internal structure of a conventional heat pump apparatus.
FIG. 10 is a conceptual view of a heat medium flow in the conventional water-refrigerant heat exchanger of plate type.

### DESCRIPTION OF EMBODIMENTS

The heat pump apparatus according to a first aspect of the present invention includes the following: a compressor for compressing refrigerant; a plate heat exchanger including a refrigerant inlet, a refrigerant outlet, a heat medium inlet, and a heat medium outlet, for performing heat exchange between the refrigerant and heat medium; a decompressor for decompressing the refrigerant; and an evaporator for performing heat exchange between the refrigerant and air.

The refrigerant inlet is oriented in a same direction as the refrigerant outlet. The heat medium inlet is oriented in a direction opposite to the heat medium outlet and located at a height different from the heat medium outlet.

According to the first aspect, the plate heat exchanger includes a plurality of approximately equal-length passages for the heat medium, thereby equalizing the flow rate distribution of the heat medium in the plate heat exchanger. This achieves a heat pump apparatus including a plate heat exchanger with excellent heat exchange efficiency.

The heat pump apparatus according to a second aspect of the present invention, in the first aspect, further includes the following: a heat medium supply port oriented in a same direction as the heat medium outlet; and a heat medium return port oriented in a direction opposite to the heat medium inlet. The heat medium outlet communicates with the heat medium supply port, and the heat medium inlet communicates with the heat medium return port.

According to the second aspect, the heat medium supply port and the heat medium return port can be oriented in the same direction in spite that the heat medium inlet and the heat medium outlet are oriented in opposite directions.

The heat pump apparatus according to a third aspect of the present invention, in the second aspect, further includes a circulation pump located below the plate heat exchanger, for circulating the heat medium. The heat medium inlet communicates with the heat medium return port via the circulation pump.

According to the third aspect, the space between the plate heat exchanger and the circulation pump is small, allowing the heat pump apparatus to be compact.

In the third aspect, the plate heat exchanger is not subjected to a direct force while the heat medium supply port and the heat medium return port are being joined together to install the heat pump apparatus. As a result, during the installation of the heat pump apparatus, the plate heat exchanger can be prevented from deforming, and the heat medium can be prevented from leaking due to the deformation.

In the heat pump apparatus according to a fourth aspect of the present invention, in the first aspect, the heat medium inlet is located below a high-voltage component and a high-voltage wire. According to the fourth aspect, even if the heat medium leaks from the heat medium inlet projecting toward the inside of the heat exchanger, the leaked heat medium is prevented from coming into contact with the high-voltage components and the high-voltage wires.

Exemplary embodiments of the present invention will now be described with reference to drawings.

### FIRST EXEMPLARY EMBODIMENT

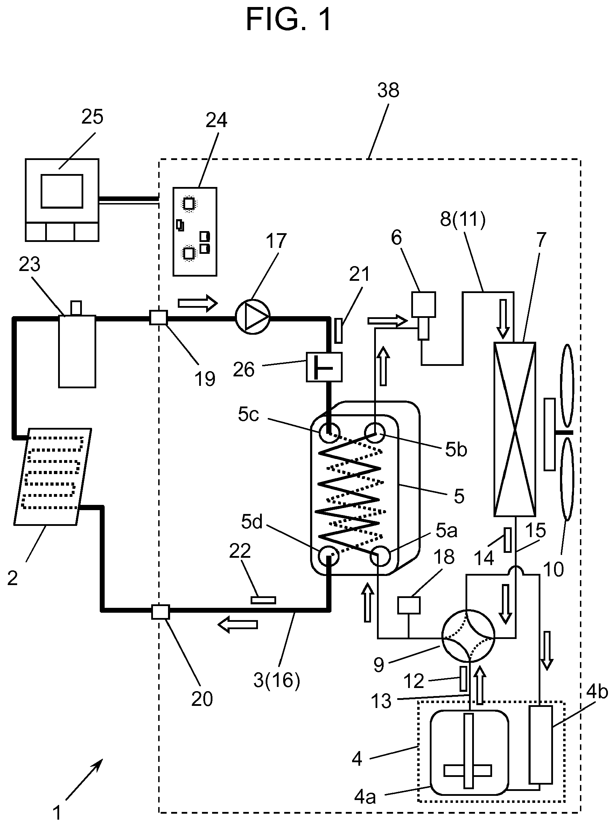

FIG. 1 is a schematic configuration view of heat pump apparatus 1 according to the first exemplary embodiment of the present invention during heater operation. In FIG. 1, the arrows indicate flows of heat medium and refrigerant during heater operation.

As shown in FIG. 1, heat pump apparatus 1 includes refrigerant circuit 8. Circuit 8 includes compressor 4 for compressing the refrigerant, water-refrigerant heat exchanger 5 for performing heat exchange between refrigerant and heat medium such as water or an antifreeze solution (water is used in the present exemplary embodiment), expansion valve 6 as a decompressor, and air heat exchanger 7 as an evaporator, all of which are joined in series.

Compressor 4 includes compressor driver 4a for motor-driving compressor 4 and accumulator 4b for trapping the refrigerant which circulates through refrigerant circuit 8. The refrigerant trapped in accumulator 4b is compressed by compressor 4 and drawn into four-way valve 9.

Four-way valve 9 is joined to water-refrigerant heat exchanger 5 and air heat exchanger 7. During heater operation, four-way valve 9 is switched as shown in FIG. 1 to allow warm water to be supplied from compressor 4 to water-refrigerant heat exchanger 5.

Water-refrigerant heat exchanger 5 is a plate heat exchanger including a plurality of rough-surface stainless plates stacked and brazed together. Heat exchanger 5 performs heat exchange between the heat medium and the refrigerant which circulates through refrigerant circuit 8.

Water-refrigerant heat exchanger 5 includes refrigerant inlet 5a for drawing in the refrigerant and refrigerant outlet 5b for drawing out the refrigerant. Inlet 5a and outlet 5b are joined to refrigerant pipe 11. Heat exchanger 5 further includes heat medium inlet 5c for drawing in the heat medium and heat medium outlet 5d for drawing out the heat medium. Inlet 5c and outlet 5d are joined to heat medium circuit 3.

Heat pump apparatus 1 includes the following components. Blowing fan 10 supplies air to air heat exchanger 7. Pressure sensor 18 detects the pressure of the refrigerant which circulates through refrigerant circuit 8. Temperature sensor 12 is disposed on pipe 13 joined to the outlet of compressor driver 4a and detects the temperature of pipe 13, which is part of refrigerant pipe 11. Temperature sensor 14 is disposed on pipe 15 joined to air heat exchanger 7, and detects the temperature of pipe 15, which is part of refrigerant pipe 11.

Heat pump apparatus 1 further includes heat medium pipe 16 which connects heat exchanger 5, external radiator 2, expansion tank 23, circulation pump 17, and flow switch 26. In heat medium pipe 16, the heat medium flows in a clockwise direction from heat medium return port 19 toward heat medium supply port 20 by way of heat exchanger 5.

Circulation pump 17 for circulating the heat medium through heat medium pipe 16 is disposed on the upstream side of heat exchanger 5. The reason for this is that the heat medium is lower in temperature on the upstream side of heat exchanger 5 than on the downstream side of heat exchanger 5, thereby improving the endurance of circulation pump 17.

Flow switch 26 is disposed on the downstream side of circulation pump 17 and detects the flow rate of the heat medium.

In FIG. 1, the arrows indicate that the refrigerant flows upward, whereas the heat medium flows downward during heater operation. In an actual heat pump apparatus, however, the refrigerant flows downward through heat exchanger 5, whereas the heat medium flows upward though heat exchanger 5 during heater operation.

Heat medium supply port 20 is joined to heat medium outlet 5d of heat exchanger 5 and supplies the heat medium either heated or cooled by heat exchanger 5 to external radiator 2 by way of heat medium circuit 3. Heat medium return port 19 is joined to heat medium inlet 5c of heat exchanger 5 and supplies the heat medium heat-exchanged in external radiator 2 to heat exchanger 5 by way of heat medium circuit 3.

Heat pump apparatus 1 further includes the following sensors. Temperature sensor 21 measures the temperature of the heat medium drawn into heat exchanger 5, whereas temperature sensor 22 measures the temperature of the heat medium drawn out from heat exchanger 5.

Expansion tank 23 is connected to heat medium pipe 16. When the temperature of the heat medium in heat medium pipe 16 is increased and the volume of the heat medium is expanded, tank 23 absorbs the expansion. This prevents excessive pressure from being applied to elements in heat medium pipe 16.

Heat pump apparatus 1 further includes control device 24 for controlling compressor 4, expansion valve 6, circulation pump 17, blowing fan 10, and other components according to the information from the sensors included in heat pump apparatus 1 and the information from remote control 25 with which the user performs various settings to operate heat pump apparatus 1.

In heat pump apparatus 1, the components other than external radiator 2, expansion tank 23, and remote control 25 are placed inside outer body 38.

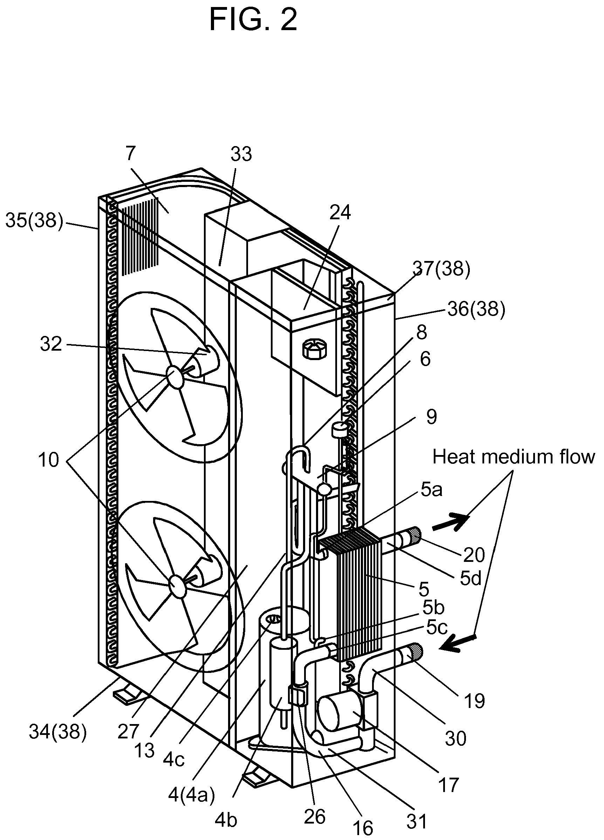

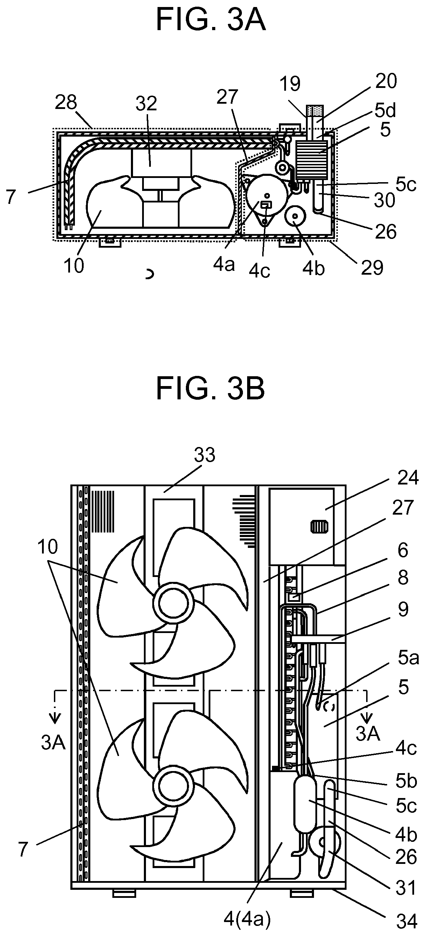

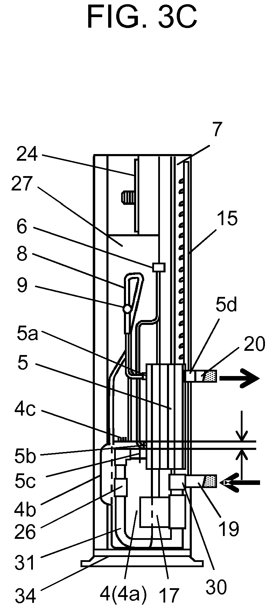

FIGS. 2, 3A, 3B, and 3C show how the components shown in FIG. 1 are arranged in outer body 38.

FIG. 2 is a perspective view of the internal structure of heat pump apparatus 1 according to the present exemplary embodiment. In FIG. 2, the inside of heat pump apparatus 1 can be seen through the outer body.

FIGS. 3A, 3B, and 3C show a cross sectional view, a front view, and a side view, respectively, of the internal structure of heat pump apparatus 1 according to the present exemplary embodiment. FIG. 3A is a sectional view taken along line 3A-3A of FIG. 3B. In FIGS. 3B and 3C, the inside of heat pump apparatus 1 can be seen through the outer body in the same manner as in FIG. 2.

As shown in FIGS. 2, 3A, 3B, and 3C, heat pump apparatus 1 is covered with outer body 38 having front plate 35, side plate 36, top plate 37, and bottom plate 34.

In heat pump apparatus 1, partition board 27 standing on bottom plate 34 separates fan circuit room 28 including blowing fan 10 from machine room 29 including refrigerant circuit 8, which includes compressor 4 and expansion valve 6.

Compressor 4 is fixed to bottom plate 34 of machine room 29. Compressor 4 includes power supply connector 4c, which connects compressor 4 and electric wires for supplying power to compressor 4. In the present exemplary embodiment, connector 4c is disposed at the top of compressor 4.

Each of refrigerant inlet 5a, refrigerant outlet 5b, and heat medium inlet 5c is formed to project forward from the front surface of the foremost stainless plate in heat exchanger 5. Heat medium outlet 5d is formed to project backward from the rear surface of the hindmost stainless plate in heat exchanger 5.

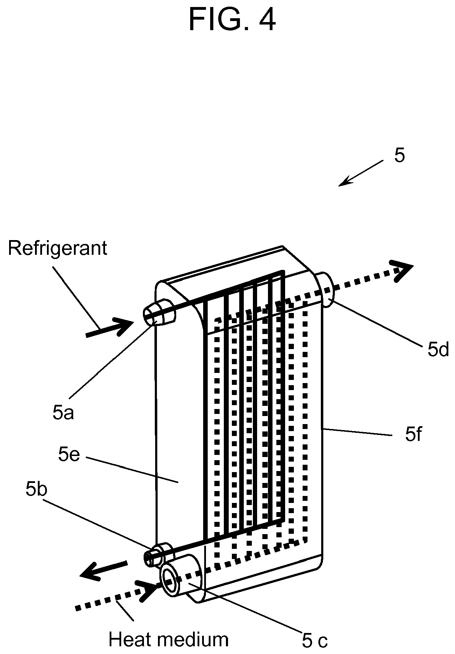

The front surface of the foremost stainless plate in heat exchanger 5 is hereinafter referred to as front side wall 5e of heat exchanger 5 (see FIG. 4). The rear surface of the hindmost stainless plate in heat exchanger 5 is hereinafter referred to as rear side wall 5f of heat exchanger 5 (see FIG. 4). Rear side wall 5f of heat exchanger 5 is disposed near the back surface of machine room 29.

Thus, refrigerant inlet 5a and refrigerant outlet 5b are formed on the same side of heat exchanger 5, whereas heat medium inlet 5c and heat medium outlet 5d are formed on opposite sides of heat exchanger 5. In other words, heat medium inlet 5c is oriented to the inside of machine room 29, whereas heat medium outlet 5d is oriented to the outside of machine room 29.

Heat medium supply port 20, which is joined to heat medium outlet 5d, is formed to project from the back of heat pump apparatus 1.

Circulation pump 17 is disposed in heat pump apparatus 1, and more specifically, in the space between heat exchanger 5 and bottom plate 34. Pump 17 is fixed to bottom plate 34 via pipe 31, which is part of heat medium circuit 3 connected to heat medium inlet 5c.

Heat medium return port 19 is joined to pipe 30 and projects from the back of heat pump apparatus 1. Pipe 30 is part of heat medium circuit 3 connected to the upstream side of circulation pump 17. Flow switch 26 is attached to pipe 31.

Heat medium inlet 5c is located below heat medium outlet 5d so as to make use of the rising force of the high-temperature heat medium, thereby efficiently circulating the heat medium.

Pipe 13 is joined to the top of compressor 4. Four-way valve 9 is located above pipe 13. Refrigerant inlet 5a of heat exchanger 5 communicates with one of the inlet ports of four-way valve 9 via pipe 13.

Air heat exchanger 7, which has an L-shaped cross section in the horizontal direction, is mounted on bottom plate 34 of fan circuit room 28.

Blowing fan 10, which is disposed inside air heat exchanger 7, supplies air to air heat exchanger 7 so as to promote the heat exchange between air and the refrigerant. Air heat exchanger 7 includes motor support base 33, which is fixed to bottom plate 34 and supports fan motor 32. Fan motor 32 drives blowing fan 10.

Fan circuit room 28 accommodates air heat exchanger 7, blowing fan 10, fan motor 32, motor support base 33, a refrigerant pipe connecting four-way valve 9 and air heat exchanger 7, and a refrigerant pipe connecting expansion valve 6 and air heat exchanger 7. Machine room 29 accommodates compressor 4, water-refrigerant heat exchanger 5, and a refrigerant pipe laid in refrigerant circuit 8.

Expansion valve 6 communicates with refrigerant outlet 5b located below refrigerant inlet 5a through a refrigerant pipe. Air heat exchanger 7 is connected to the downstream side of expansion valve 6 through a refrigerant pipe.

The refrigerant pipe forming refrigerant circuit 8 is placed above and lateral to compressor 4 in machine room 29. Control device 24 is placed at the top of machine room 29.

The operation of heat pump apparatus 1 will now be described with reference to FIG. 1. First, the operation to generate high-temperature heat medium will be described. In the case of generating high-temperature heat medium, four-way valve 9 is switched to the direction shown by solid lines.

When the user inputs an instruction via remote control 25 to start heat pump apparatus 1, an appropriate signal is sent from control device 24 to start the operation.

When compressor 4 is started, the refrigerant trapped in accumulator 4b is compressed by compressor driver 4a and sent to heat exchanger 5 by way of pipe 13 and four-way valve 9. Heat exchanger 5 performs heat exchange between the high-temperature high-pressure refrigerant and the heat medium sent from circulation pump 17.

When drawn into heat exchanger 5 through refrigerant inlet 5a, the high-temperature high-pressure refrigerant is in a gas-phase state and has a low pressure loss. The gas-phase refrigerant is condensed by the heat exchange with the heat medium so as to turn into a two-phase state, having a comparatively high pressure loss. The refrigerant then turns into a liquid-phase state, having a low pressure loss, and is drawn out through refrigerant outlet 5b.

The refrigerant drawn out of heat exchanger 5 is decompressed and expanded by expansion valve 6 and sent to air heat exchanger 7. The expanded refrigerant is heat-exchanged with the air coming from blowing fan 10 while passing through air heat exchanger 7, thereby being evaporated.

The evaporated refrigerant passes through four-way valve 9 and returns to accumulator 4b. Refrigerant circuit 8 repeats these series of operations, allowing the heat medium to be heated by heat exchanger 5 so as to generate high-temperature heat medium.

The heat medium flowing through heat medium pipe 16, on the other hand, is sent to heat exchanger 5 by circulation pump 17. The heat medium heated by heat exchanger 5 is sent to external radiator 2 by way of heat medium circuit 3 and heat medium supply port 20. The high-temperature heat medium is radiated by external radiator 2.

The heat medium cooled by the radiation is returned to circulation pump 17 by way of expansion tank 23 and heat medium return port 19. These series of operations are repeated through heat medium pipe 16 so as to heat the room where external radiator 2 is installed.

Upon detecting that the heat medium is not flowing through heat medium pipe 16, flow switch 26 sends an abnormal signal to control device 24. Upon receiving the abnormal signal, control device 24 stops the operation of heat pump apparatus 1.

Water-refrigerant heat exchanger 5 used in the present exemplary embodiment will now be described as follows. The heat exchange performance of heat exchanger 5 largely depends on the flow rate distributions of the refrigerant and the heat medium in heat exchanger 5.

FIG. 4 is a perspective view showing the shape of heat exchanger 5 and flows of the refrigerant and the heat medium in heat exchanger 5 used in the present exemplary embodiment. In FIG. 4, the solid lines indicate the refrigerant flow, and the dotted lines indicate the heat medium flow.

As shown in FIG. 4, the refrigerant is drawn into heat exchanger 5 through refrigerant inlet 5a, flows toward rear side wall 5f, and is divided into refrigerant streams flowing downward through the passages formed between the plates. The streams are joined together at the bottom of heat exchanger 5. The refrigerant then flows toward front side wall 5e and is drawn out from refrigerant outlet 5b.

The heat medium, on the other hand, is drawn into heat exchanger 5 through heat medium inlet 5c, flows toward rear side wall 5f, and is divided into heat medium streams flowing upward through the passages formed between the plates. The streams are joined together at the top of heat exchanger 5. The heat medium then flows toward rear side wall 5f and is drawn out from heat medium outlet 5d.

Thus, during heater operation, the heat exchange between the refrigerant and the heat medium is performed mainly when the refrigerant flows in the direction opposite to the heat medium through the passages formed between the plates in heat exchanger 5.

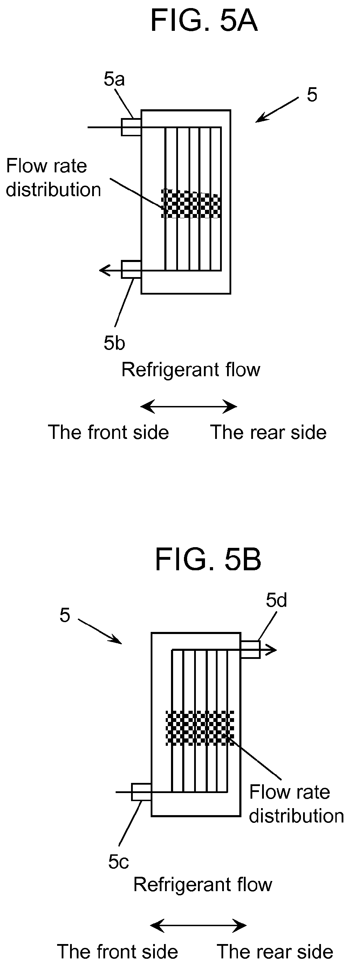

FIGS. 5A and 5B are conceptual views of the refrigerant flow and the heat medium flow, respectively, in heat exchanger 5.

As shown in FIG. 5B, the heat medium passages formed between the plates in heat exchanger 5 have approximately the same length. This is because heat medium inlet 5c is formed on front side wall 5e whereas heat medium outlet 5d is formed on rear side wall 5f. As a result, as shown in FIG. 5B, the flow rate distribution of the heat medium is equalized between the passages formed in heat exchanger 5.

In contrast, as described above, the conventional structure shown in FIG. 10 has a non-uniform flow rate distribution, that is, the flow rate of the heat medium is high on the rear side and low on the front side.

According to the present invention, the flow rate distribution of the refrigerant is not as non-uniform as that of the heat medium in spite that refrigerant inlet 5a and refrigerant outlet 5b are formed on front side wall 5e. The reason for this is described as follows.

In the case of generating high-temperature heat medium, the refrigerant is drawn in through refrigerant inlet 5a and undergoes a change of phase in heat exchanger 5, namely, the gas-phase state, the two-phase state, and the liquid-phase state in that order. In the case of using R407C as the refrigerant, the pressure loss per unit length of the refrigerant is 0.08 kPa/m in the gas-phase state, 4.0 kPa/m in the two-phase state, and 1.6 kPa/m in the liquid-phase state.

In heat exchanger 5, the volume ratio of the refrigerant in the gas-phase, two-phase, and liquid-phase states is 1:7:2.

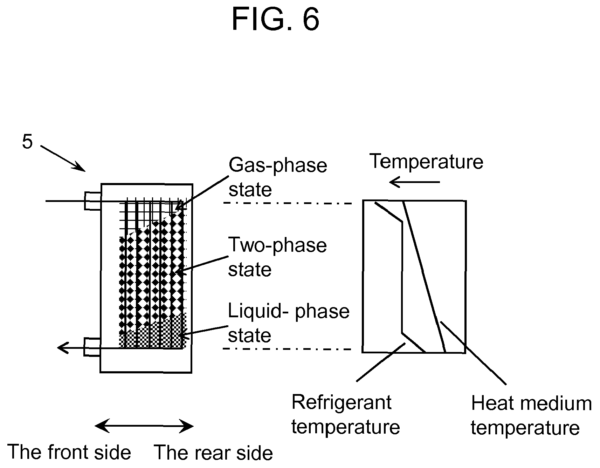

FIG. 6 shows the relation between the refrigerant distribution in each phase state and the temperature of the heat medium in heat exchanger 5. More specifically, FIG. 6 shows the refrigerant distribution in each of the gas-phase, two-phase, and liquid-phase states (left side) and the temperature distributions of the refrigerant and the heat medium (right side) in heat exchanger 5.

As shown on the right side of FIG. 6, the temperature of the refrigerant decreases at the transition from the gas-phase state to the two-phase state, remains substantially the same during the two-phase state, and decreases at the transition from the two-phase state to the liquid-phase state.

As shown on the left side of FIG. 6, most of the refrigerant flowing downward through the passages formed between the stacked plates is in the two-phase state. In the two-phase state, the refrigerant streams flowing through these passages have approximately the same pressure loss.

As the gas-phase refrigerant drawn in through refrigerant inlet 5a moves away from refrigerant inlet 5a, the pressure loss increases and the flow rate decreases. As described above, however, the pressure loss of the refrigerant is much lower in the gas-phase state than in the two-phase state.

Similarly, the refrigerant pressure loss is lower in the liquid-phase state than in the two-phase state. As a result, while the refrigerant streams are joined together at the bottom of heat exchanger 5 and drawn out through refrigerant outlet 5b, the liquid-phase refrigerant has a low pressure loss.

Therefore, as shown in FIG. 5A, even if refrigerant inlet 5a and refrigerant outlet 5b are formed on front side wall 5e, the refrigerant has a substantially uniform flow rate distribution in heat exchanger 5. This allows heat exchanger 5 to perform uniform heat exchange throughout and to improve the amount and efficiency of the heat exchange.

Thus, in spite of being made compact by reducing the number of the plates, the plate heat exchanger in the present invention has similar performance to the conventional ones.

Increasing the number of plates in heat exchanger 5 increases the cross sectional area of the passages, and consequently reduces the pressure losses of the refrigerant and the heat medium. This enables external radiator 2 to have a large pressure loss, thereby improving the heating performance of heat pump apparatus 1.

Even if the heat medium, which can be water or a conductive antifreeze solution, leaks out for some reason, the leaked heat medium should be prevented from coming into contact with high-voltage wires and high-voltage components, particularly with power supply connector 4c and control device 24 of compressor 4.

In the present exemplary embodiment, as shown in FIG. 2, control device 24 is located at the top of machine room 29, that is, above heat medium pipe 16. Heat medium inlet 5c projecting forward in heat exchanger 5 is located below power supply connector 4c.

Thus, the heat medium leaked out in machine room 29 is prevented from coming into contact with control device 24 and power supply connector 4c.

In the exemplary embodiment, heat medium inlet 5c projects forward from the bottom of front side wall 5e and is oriented in the direction opposite to heat medium return port 19 projecting backward from outer body 38. Circulation pump 17 is disposed in the space between heat exchanger 5 and bottom plate 34. Pump 17 communicates with heat medium return port 19 via pipe 30, and further communicates with heat medium inlet 5c via pipe 31.

The water-refrigerant heat exchanger of the present exemplary embodiment is better configured to install the circulation pump in the machine room than the water-refrigerant heat exchanger of the above-described conventional art. The configuration is described in more detail as follows.

In the above-described conventional art, both heat medium inlet 111c and heat medium outlet 111d of heat exchanger 111 project backward.

One approach to communicating the circulation pump with heat exchanger 111 having the above-described structure in the machine room is to place, for example, an S-shaped pipe below water-refrigerant heat exchanger 111 and further to place the circulation pump below the pipe.

Placing circulation pump 17 in machine room 29 as in the present exemplary embodiment requires a less complicated and less lengthy pipe between circulation pump 17 and heat medium inlet 5c than in the above-described conventional art. This reduces the pressure loss of the heat medium flowing through heat medium pipe 16, thereby reducing heat radiation loss. As a result, the heat exchange performance is improved and the power consumption is reduced.

Reducing the pressure loss of the heat medium flowing through heat medium pipe 16 makes it possible to widely vary the structure of external radiator 2, thereby increasing the design freedom of heat pump apparatus 1.

Another approach to connecting the circulation pump to water-refrigerant heat exchanger 111 in the machine room is to provide a space for the circulation pump behind heat exchanger 111. In this case, the machine room needs a large space to accommodate heat exchanger 111 and the circulation pump.

According to the present exemplary embodiment, placing circulation pump 17 in machine room 29 requires a smaller space for heat exchanger 5 and circulation pump 17 than in the conventional art, allowing heat pump apparatus 1 to be compact.

Circulation pump 17 is fixedly supported by bottom plate 34 so as to be easily drained. Pump 17 is placed below heat exchanger 5 and power supply connector 4c so as to prevent high-voltage components and high-voltage wires from coming into contact with water during drainage.

In the present exemplary embodiment, circulation pump 17 is located below heat exchanger 5 and fixedly supported by bottom plate 34. Circulation pump 17 is removable and can be exposed by simply removing side plate 36 for maintenance. Thus, the present exemplary embodiment simplifies the maintenance.

At the time of installing heat pump apparatus 1, a pipe is joined to heat medium supply port 20 so as to communicate with external radiator 2 via the pipe. In addition, a pipe is joined to heat medium return port 19 so as to communicate with expansion tank 23 via the pipe.

Heat medium supply port 20 communicates with heat medium outlet 5d via heat medium circuit 3, whereas heat medium return port 19 communicates with heat medium inlet 5c via circulation pump 17 and heat medium circuit 3.

According to the present exemplary embodiment, heat exchanger 5 is not subjected to a direct force while heat medium supply port 20 and heat medium return port 19 are being joined together to install heat pump apparatus 1. As a result, heat exchanger 5 can be prevented from deforming, and the heat medium can be prevented from leaking due to the deformation.

Heat pump apparatus 1 of the present exemplary embodiment during cooling operation will now be described.

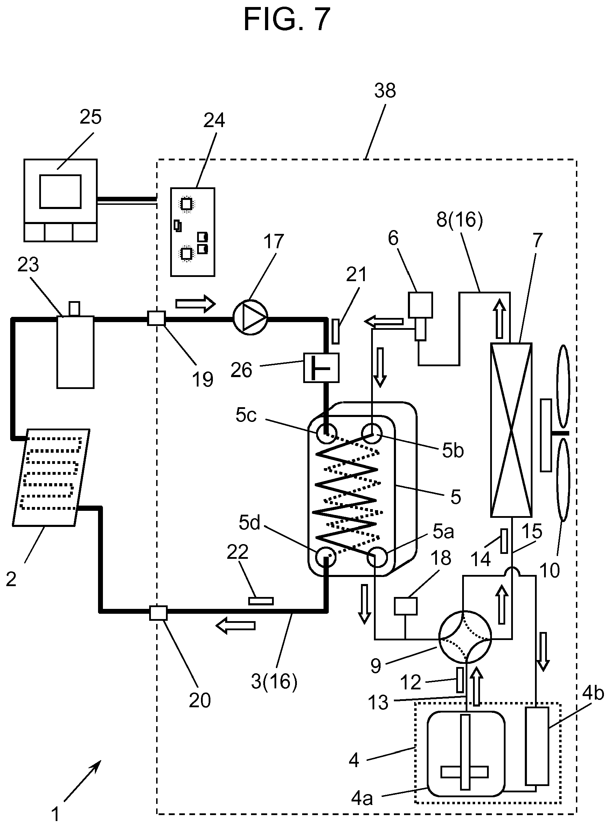

FIG. 7 is a schematic configuration view of heat pump apparatus 1 during cooling operation. In FIG. 7, the arrows indicate flows of the heat medium and the refrigerant during cooling operation.

During cooling operation, four-way valve 9 is switched as shown in FIG. 7 to allow the refrigerant to circulate through refrigerant circuit 8 in the direction opposite to that during heater operation. As a result, the low-temperature liquid refrigerant generated in expansion valve 6 is heat-exchanged with the heat medium in heat exchanger 5 so as to generate low-temperature heat medium.

The generated low-temperature heat medium is supplied to external radiator 2 so as to cool the room where external radiator 2 is installed.

During cooling operation, the refrigerant flows upward through the passages formed between the plates of heat exchanger 5 while undergoing a change of phase in heat exchanger 5, namely, the liquid-phase state, the two-phase state, and the gas-phase state in that order.

Consequently, during cooling operation, too, the refrigerant in heat exchanger 5 has a substantially uniform flow rate distribution similar to that shown in FIG. 6. Thus, heat exchanger 5 of the present exemplary embodiment has excellent heat exchange efficiency during cooling operation, too.

External radiator 2 in the present exemplary embodiment can be an external radiator panel such as a radiant heating/cooling system. Alternatively, however, a panel heater or a fan convector with blowing fans can be used.

### SECOND EXEMPLARY EMBODIMENT

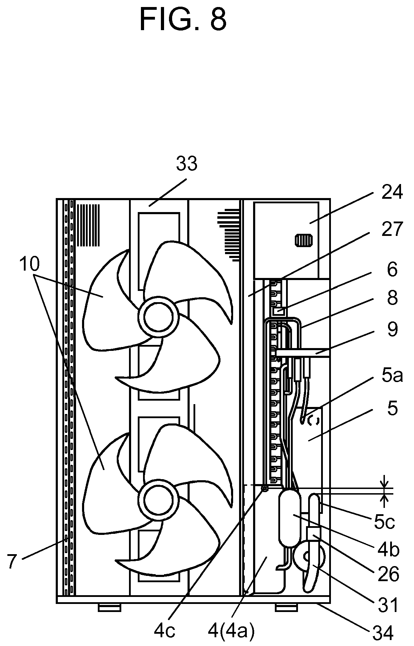

FIG. 8 is a front view of heat pump apparatus 1 according to a second exemplary embodiment of the present invention.

In FIG. 8, the inside of heat pump apparatus 1 can be seen through outer body 38 in the same manner as in FIG. 3B. The following is a description of the differences from the first exemplary embodiment.

In the first exemplary embodiment, power supply connector 4c is disposed on the upper surface of compressor 4. In the present exemplary embodiment, on the other hand, as shown in FIG. 8, power supply connector 4c is disposed on a side surface of compressor 4.

According to the present exemplary embodiment, heat medium inlet 5c is located below power supply connector 4c. As a result, similar to the first exemplary embodiment, the leaked heat medium can be prevented from coming into contact with power supply connector 4c.

The leaked heat medium can be further prevented from coming into contact with power supply connector 4c by locating power supply connector 4c at a position of the side surface of compressor 4 that is above heat medium inlet 5c and is farther away from heat exchanger 5.

### INDUSTRIAL APPLICABILITY

As described above, the heat pump apparatus of the present invention can be applied as water heaters and hot-water room heaters of household and industrial uses.

### REFERENCE MARKS IN THE DRAWINGS

- 1, 110: heat pump apparatus
- 2: external radiator
- 3: heat medium circuit
- 4, 113: compressor
- 4a: compressor driver
- 4b, 115: accumulator
- 4c: power supply connector
- 5, 111: water-refrigerant heat exchanger
- 5a: refrigerant inlet
- 5b: refrigerant outlet
- 5c, 111c: heat medium inlet
- 5d, 111d: heat medium outlet
- 5e: front side wall
- 5f: rear side wall
- 6, 114: expansion valve
- 7: air heat exchanger
- 8: refrigerant circuit
- 9: four-way valve
- 10: blowing fan
- 11: refrigerant pipe
- 12, 14, 21, 22: temperature sensor
- 13, 15, 30, 31: pipe
- 16: heat medium pipe
- 17: circulation pump
- 18: pressure sensor
- 19, 116: heat medium return port
- 20, 117: heat medium supply port
- 23: expansion tank
- 24: control device
- 25: remote control
- 26: flow switch
- 27, 112: partition board
- 28: fan circuit room
- 29: machine room
- 32: fan motor
- 33: motor support base
- 34: bottom plate
- 35: front plate
- 36: side plate
- 37: top plate
- 38: outer body

## Claims

1. A heat pump apparatus comprising:
a compressor for compressing refrigerant;
a plate heat exchanger including a refrigerant inlet, a refrigerant outlet, a heat medium inlet, and a heat medium outlet, for performing heat exchange between the refrigerant and heat medium;
a decompressor for decompressing the refrigerant;
an evaporator for performing heat exchange between the refrigerant
and air; and
a machine room accommodating the compressor, the decompressor, and the plate heat exchanger,
wherein
the refrigerant inlet, the refrigerant outlet, and
the heat medium inlet are oriented to an inside of the machine room and,
the heat medium outlet is oriented to an outside of the machine room and located at a height different from the heat medium inlet.

2. The heat pump apparatus of claim 1, further comprising:
a heat medium supply port oriented in a same direction as the heat medium outlet; and
a heat medium return port oriented in a direction opposite to the heat medium inlet,
wherein
the heat medium outlet communicates with the heat medium supply port, and
the heat medium inlet communicates with the heat medium return port.

3. The heat pump apparatus of claim 2, further comprising a circulation pump located below the plate heat exchanger, for circulating the heat medium,
wherein the heat medium inlet communicates with the heat medium return port via the circulation pump.

4. The heat pump apparatus of claim 1, wherein the heat medium inlet is located below a high-voltage component and a high-voltage wire.
